# EUROPÄISCHE PATENTSCHRIFT

(11) **EP 0 728 957 B1**
(45) Veröffentlichungstag und Bekanntmachung des Hinweises auf die Patenterteilung: **28.01.1998**
(21) Anmeldenummer: 95117771.6
(22) Anmeldetag: 11.11.1995
(51) Int. Cl.: F16D 3/76, F16F 15/124

(54) **Drehelastische Kupplung**
Rotational flexible coupling
Accouplement élastique rotatif

(30) Priorität: 24.02.1995 DE 19506454
(43) Veröffentlichungstag der Anmeldung: 28.08.1996
(73) Patentinhaber: Firma Carl Freudenberg, 69469 Weinheim (DE)
(72) Erfinder: Spies, Karl-Heinz, Dr., D-69488 Birkenau (DE); Sander, Hans-Gerhard, D-69469 Weinheim (DE); Barth, Armin, D-69517 Gorxheimertal (DE)

(56) Entgegenhaltungen:
- DE-C- 4 018 596
- DE-C- 4 312 577
- DE-C- 4 400 564

## Beschreibung

Die Erfindung betrifft eine drehelastische Kupplung mit einer Rotationsachse, umfassend einen ersten und einen zweiten Ring, die einander mit radialem Abstand umschließen, wobei in dem durch den Abstand gebildeten Spalt ein erster Federkörper aus elastomerem Werkstoff angeordnet ist und wobei an zumindest einem der Ringe eine Riemenscheibe mittels eines zweiten Federkörpers aus elastomerem Werkstoff relativ drehelastisch befestigt und an zumindest einem der Ringe mittels eines Gleitlagers zumindest in radialer Richtung abgestützt ist.

Eine solche Kupplung ist aus der DE 40 18 596 C2 bekannt. Die drehelastische Kupplung weist einen Torsionsschwingungsdämpfer auf, wobei die Riemenscheibe in radialer Richtung durch eine Gleitlagerbuchse aus metallischem Werkstoff an einem der Ringe abgestützt ist. Die Gleitlagerung bedingt eine gute Relativbeweglichkeit der beiden aufeinander abgestützten Teile zueinander und eine exakte räumliche Zuordnung während einer langen Gebrauchsdauer.

Der Erfindung liegt die Aufgabe zugrunde, eine solche Kupplung derart weiterzuentwickeln, daß die Dämpfungseigenschaften der Gleitlagerabstützung verbessert werden, daß das Gleitlager einfacher und kostengünstiger herstellbar ist und daß gute Gleiteigenschaften fliehkraftunabhängig erhalten bleiben.

Diese Aufgabe wird erfindungsgemäß mit den Merkmalen von Anspruch 1 gelöst. Auf vorteilhafte Ausgestaltungen nehmen die Unteransprüche Bezug.

Zur Lösung der Aufgabe ist es vorgesehen, daß das Gleitlager als Führungsring ausgebildet ist und aus elastomerem Werkstoff besteht und daß der Führungsring und/oder der relativ dazu verdrehbare Ring zumindest eine mit Schmiermittel befüllte Schmiermitteltasche aufweist, die abgedichtet ist. Hierbei ist von Vorteil, daß die Riemenscheibe durch den Führungsring in radialer Richtung einerseits und durch den zweiten Federkörper aus elastomerem Werkstoff in radialer Richtung andererseits vollständig schwingungsentkoppelt innerhalb der Kupplung angeordnet ist und daher unerwünschte Riemengeräusche zuverlässig vermieden werden. Um eine während der gesamten Gebrauchsdauer gleichbleibend gute Abstützung der Riemenscheibe auf dem Führungsring zu gewährleisten, sind die mit einem Schmiermittel befüllten Schmiermitteltaschen vorgesehen die eine außerordentlich reibungsarme Relativbeweglichkeit des Führungsrings relativ zum verdrehbaren Ring ermöglichen. Die Schmiermitteltaschen sind gegenüber der Umgebung abgedichtet, um einen fliehkraftbedingten Verlust des Schmiermittels während der Rotation der drehelastischen Kupplung um ihre Rotationsachse zu vermeiden. Hinsichtlich einer in fertigungstechnischer Hinsicht einfachen und wirtschaftlich kostengünstigen Herstellbarkeit der Kupplung weist bevorzugt der Führungsring in Richtung des relativ verdrehbaren Rings angeordnete Vertiefungen auf, die als Schmiermitteltaschen ausgebildet sind.

Der erste Ring kann als Nabenring und der zweite Ring als Schwungring ausgebildet sein, wobei der Schwungring den Nabenring außenseitig umschließt und wobei der Nabenring mit der Riemenscheibe verbunden ist, die durch den Führungsring auf einem Axialvorsprung des im wesentlichen L-förmigen Schwungrings abgestützt ist. Bei der außenseitigen Anordnung des Schwungrings ist von Vorteil, daß dieser aufgrund seiner an die jeweiligen Gegebenheiten des Anwendungsfalls problemlos anpaßbaren Abmessungen eine große Schwungmasse aufweisen kann, um Torsionsschwingungen in ausgezeichneter Weise zu dämpfen.

Die Riemenscheibe weist bevorzugt ein im Querschnitt betrachtet in axialer Richtung offnenes C-förmiges Profil auf, wobei der Nabenring ein entgegen der Riemenscheibe offnenes C-förmiges Profil aufweist und wobei die Riemenscheibe die sich in axialer Richtung erstreckende, radial äußere Begrenzung des Nabenrings und den Axialvorsprung des Schwungrings nutförmig umgreift. Durch diese Ausgestaltung ist bedingt, daß die Kupplung besonders kompakte Abmessungen in axialer Richtung aufweist. Der Führungsring und die beiden Federkörper sind im wesentlichen in einer Radialebene angeordnet, die - im Querschnitt betrachtet - die Riemenspur im wesentlichen mittig durchschneidet. Verkantungen der einzelnen Bauteile relativ zueinander sind durch diese Ausgestaltung weitgehend ausgeschlossen. Auch in radialer Richtung weist eine derart gestaltete Kupplung kompakte Abmessungen auf, da innerhalb der C-förmigen Ausnehmung des Nabenrings der zweite Federkörper zur drehelastischen Verbindung der Riemenscheibe mit dem Nabenring angeordnet ist. Die C-förmige Ausnehmung der Riemenscheibe ist im wesentlichen vollständig ausgefüllt mit dem Führungsring, der mit der Innenseite der Riemenspur adhäsiv verbunden ist, dem radial innerhalb des Führungsrings angeordneten Axialvorsprung des Schwungrings, der am Führungsring relativ drehbeweglich abgestützt ist und dem radial innerhalb des Axialvorsprungs angeordneten ersten Federkörper, der innerhalb des Spalts zwischen der radial äußeren Begrenzung des Nabenrings und dem Axialvorsprung des Schwungrings anvulkanisiert ist. Die für gute Gebrauchseigenschaften funktionswesentliche Bauteile sind dadurch auf kleinstmöglichem Raum untergebracht.

Der Führungsring besteht bevorzugt aus einem elastomerem Werkstoff und weist eine Härte Shore A auf, die größer ist als die Härte Shore A des ersten und des zweiten Federkörpers, wobei der Führungsring und die Riemenscheibe gehaftet verbunden sind. Der Führungsring überdeckt den Boden der Riemenscheibe im wesentlichen vollständig und ist mit der Stirnseite des Axialvorsprungs des Schwungrings und/oder der Stirnseite der radial äußeren Begrenzung des Nabenrings in Berührung bringbar. Durch die vergleichsweise große Härte Shore A des Führungsrings werden Relaxationserscheinungen und abrasiver Verschleiß bei Relativverdrehungen der Riemenscheibe zum Schwungring auf ein Minimum begrenzt. Der Führungsring und die Riemenscheibe sind bevorzugt miteinander vulkanisiert wobei der Führungsring im Bereich des Bodens der Riemenscheibe als Axialgleitlager ausgebildet ist. Neben betriebsbedingten Radialbelastungen kann eine derart ausgestaltete Kupplung zumindest einseitig auftretende Axialkräfte aufnehmen. Sowohl bei radialen als auch bei axialen Belastungen der Riemenscheibe ist diese stets schwingungsentkoppelt zum Nabenund Schwungring angeordnet. Die Lagerung der Riemenscheibe, die durch den Führungsring gebildet ist, weist daher ausgezeichnete Dämpfungseigenschaften auf.

Der Führungsring überdeckt die dem Radialvorsprung des Schwungrings axial zugewandte Stirnseite der Riemenscheibe im wesentlichen vollständig, wobei der Führungsring und der Radialvorsprung einander unter elastischer Vorspannung dichtend berühren. Hierbei ist von Vorteil, daß das Schmiermittel auch bei hohen Drehzahlen der Kupplung und großen betriebsbedingten Fliehkräften zuverlässig zwischen dem Führungsring und dem in radialer Richtung innenseitig angrenzenden Axialvorsprung gehalten wird. Eine Leckage des Schmiermittels durch die sich in radialer Richtung erstreckende Trennfuge zwischen der Riemenscheibe und dem Radialvorsprung des Schwungrings wird durch die dichtende Berührung des Führungsrings am Radialvorsprung zuverlässig vermieden. Eine weiter verbesserte Abdichtung ist gegeben, wenn der Führungsring und der Radialvorsprung eine im wesentlichen labyrithförmige Dichtung bilden.

Dazu ist es bevorzugt vorgesehen, daß der Führungsring mit zumindest zwei sich axial in Richtung des Radialvorsprungs erstreckenden Dichtlippen versehen ist, die in mit radialem Abstand benachbarte ringförmige Vertiefung des Radialvorsprungs dichtend eingreifen und einen ringförmigen Hohlraum begrenzen. Der Hohlraum kann von kapillaraktiver Enge sein, so daß Teile des Schmiermittels, die die in radialer Richtung innere Dichtlippe passieren innerhalb des Spalts gehalten werden.

Nach einer bevorzugten Ausgestaltung ist es vorgesehen, daß der Hohlraum mit einem Sperrfett befüllt ist, das eine größere Zähigkeit aufweist als das Schmiermittel. Auch bei sehr hohen Drehzahlen und einem vergleichsweise wenig zähen Schmiermittel ist eine zuverlässige Abdichtung in Richtung der Umgebung sicher gewährleistet.

Der Führungsring ist bevorzugt einstückig ineinanderübergehend ausgebildet. Zumindest der Nabenring und die Riemenscheibe bestehen bevorzugt jeweils aus einem spanlos umformbaren Blechteil, was im Hinblick auf eine einfache und kostengünstige Herstellung der Kupplung von hervorzuhebendem Vorteil ist.

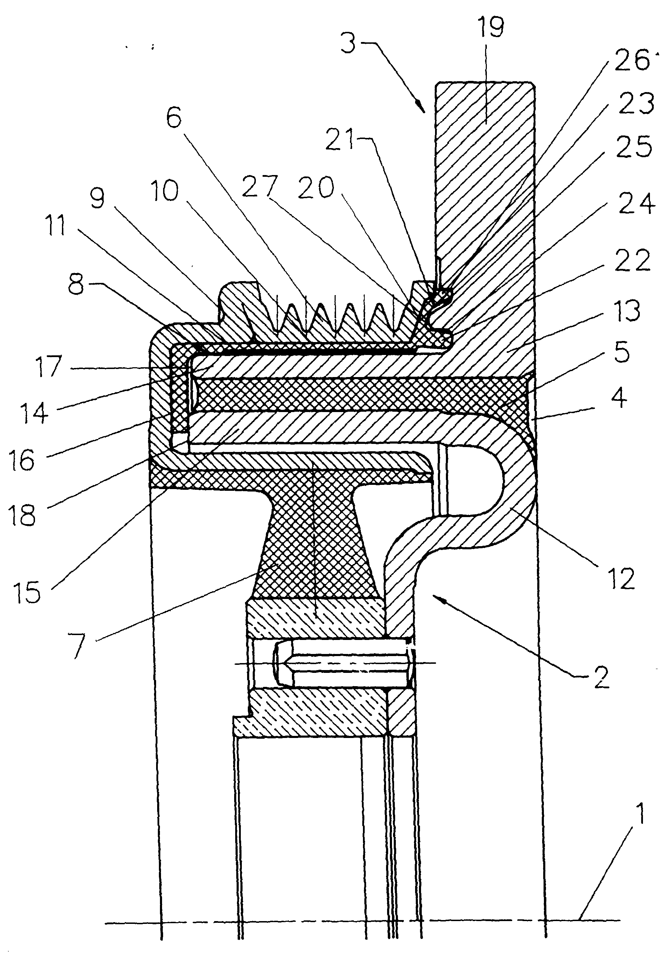

Ein Ausführungsbeispiel der erfindungsgemäßen drehelastischen Kupplung ist in der Zeichnung dargestellt und wird im folgenden näher erläutert.

In der Zeichnung ist eine drehelastische Kupplung gezeigt, die zum Antrieb von Nebenaggregaten an die Kurbelwelle einer hier nicht dargestellten Verbrennungskraftmaschine anflanschbar ist. Die Kupplung umfaßt einen ersten 2 und einen zweiten Ring 3, die einander konzentrisch zugeordnet sind und eine gemeinsame Rotationsachse 1 umschließen. Der zweite Ring 3 ist als Schwungring 13 ausgebildet und umschließt den als Nabenring 12 ausgebildeten ersten Ring 2 radial außenseitig mit Abstand, wobei in dem durch den Abstand gebildeten Spalt 4 ein erster Federkörper 5 aus elastomerem Werkstoff angeordnet ist. Der erste Federkörper 5 ist in Verbindung mit dem Schwungring 13 vorgesehen, um während des Betriebs der Kupplung auftretende Torsionsschwingungen zu dämpfen. Der erste Federkörper 5 weist eine Härte Shore A auf, die 80 beträgt. Die Riemenscheibe 6 ist mittels des zweiten Federkörpers 7, der ebenfalls aus einem elastomeren Werkstoff besteht, relativ drehelastisch mit dem Nabenring 12 verbunden, wobei die Riemenscheibe 6 innenseitig ihrer Riemenlauffläche auf dem Axialvorsprung 14 des Schwungrings 13 abgestützt ist. Zwischen der Riemenscheibe 6 und dem Axialvorsprung 14 ist ein Gleitlager 8 angeordnet, das als Führungsring 9 ausgebildet ist und ausschließlich aus elastomerem Werkstoff besteht. In diesem Ausführungsbeispiel ist es vorgesehen, daß der Führungsring 9 auf der dem Axialvorsprung 14 zugewandten Seite mit gleichmäßig in Umfangsrichtung verteilten Schmiermitteltaschen 11 versehen ist, die mit einem Schmiermittel 10 befüllt sind. Bevorzugt gelangen gleichmäßig in Umfangsrichtung verteilte Schmiermitteltaschen zur Anwendung.

Der erste und der zweite Federkörper 5, 7 sind jeweils mit den in radialer Richtung beiderseits angrenzenden Teilen vulkanisiert, wobei der zweite Federkörper 7, der zwischen dem Nabenring 12 und der Riemenscheibe 6 angeordnet ist, eine Härte Shore A von 55 aufweist. Der Führungsring 9 ist im wesentlichen C-förmig gestaltet, einstückig ineinanderübergehend ausgebildet und adhäsiv mit der Riemenscheibe 6 verbunden. Der Führungsring 9 überdeckt den Boden 16 der Riemenscheibe 6 im wesentlichen vollständig und überdeckt in diesem Beispiel die Stirnseite 17 des Axialvorsprungs 14 des Schwungrings 13 und die Stirnseite 18 der radial äußeren Begrenzung 15 des Nabenrings 12. Die radial äußere Begrenzung 15 des Nabenrings 12 berührt den Führungsring 9 in diesem Bereich unter elastischer Vorspannung anliegend und relativ beweglich.

Die dem Radialvorsprung 19 des Schwungrings 13 zugewandte Stirnseite 20 der Riemenscheibe 6 ist mit dem Führungsring 9 adhäsiv verbunden, wobei der Führungsring 9 mit zwei sich axial in Richtung des Radialvorsprungs 19 erstreckenden Dichtlippen 22, 23 versehen ist, die in mit radialem Abstand benachbarte ringförmigen Vertiefungen 24, 25 des Radialvorsprungs 19 dichtend eingreifen. Die Dichtlippen 22, 23 und die Vertiefungen 24, 25 bilden eine labyrinthförmige Dichtung 21, wobei die einander mit radialem Abstand benachbarten Dichtlippen 22, 23 einen Hohlraum 26 begrenzen, der mit einem zähflüssigen Sperrfett 27 befüllt ist. Hierbei ist von Vorteil, daß einerseits das vergleichsweise weniger zähe Schmiermittel 10 zuverlässig innerhalb der Schmiermitteltaschen 11 gehalten wird und andererseits Verunreinigungen von den relativ zueinander beweglichen Gleitflächen der Teile ferngehalten werden. Gebrauchsdauerverringernder, abrasiver Verschleiß wird dadurch auf ein Minimum begrenzt.

## Patentansprüche

1. Drehelastische Kupplung mit einer Rotationsachse (1), umfassend einen ersten (2) und einen zweiten Ring (3), die einander mit radialem Abstand umschließen, wobei in dem durch den Abstand gebildeten Spalt (4) ein erster Federkörper (5) aus elastomerem Werkstoff angeordnet ist und wobei an zumindest einem der Ringe eine Riemenscheibe (6) mittels eines zweiten Federkörpers (7) aus elastomerem Werkstoff relativ drehelastisch befestigt und an zumindest einem der Ringe mittels eines Gleitlagers (8) zumindest in radialer Richtung abgestützt ist, dadurch gekennzeichnet, daß das Gleitlager (8) als Führungsring (9) ausgebildet ist und aus elastomerem Werkstoff besteht und daß der Führungsring (9) und/oder der relativ dazu verdrehbare Ring (3) zumindest eine mit Schmiermittel (10) befüllte Schmiermitteltasche (11) aufweist, die abgedichtet ist.

2. Kupplung nach Anspruch 1, dadurch gekennzeichnet, daß der erste Ring (2) als Nabenring (12) und der zweite Ring (3) als Schwungring (13) ausgebildet ist, daß der Schwungring (13) den Nabenring (12) außenseitig umschließt und daß der Nabenring (12) mit der Riemenscheibe (6) verbunden ist, die durch den Führungsring (9) auf einem Axialvorsprung (14) des im wesentlichen L-förmigen Schwungrings (13) abgestützt ist.

3. Kupplung nach einem der Ansprüche 1 bis 2, dadurch gekennzeichnet, daß die Riemenscheibe (6) im Querschnitt betrachtet ein in axialer Richtung offnenes C-förmiges Profil aufweist, daß der Nabenring (12) ein entgegen der Riemenscheibe (6) offnenes C-förmiges Profil aufweist und daß die Riemenscheibe (6) die sich in axialer Richtung erstreckende, radial äußere Begrenzung (15) des Nabenrings (12) und den Axialvorsprung (14) des Schwungrings (13) nutförmig umgreift.

4. Kupplung nach einem der Ansprüche 1 bis 3, dadurch gekennzeichnet, daß der Führungsring (9) nur aus elastomerem Werkstoff besteht und eine Härte Shore A aufweist, die größer ist als die Härte Shore A des ersten und des zweiten Federkörpers (5, 7), daß der Führungsring (9) und die Riemenscheibe (6) gehaftet verbunden sind und daß der Führungsring (9) den Boden (16) der Riemenscheibe (6) im wesentlichen vollständig überdeckt und mit der Stirnseite (17) des Axialvorsprungs (14) des Schwungrings (13) und/oder der Stirnseite (18) der radial äußeren Begrenzung (15) des Nabenrings (12) in Berührung bringbar ist.

5. Kupplung nach einem der Ansprüche 1 bis 4, dadurch gekennzeichnet, daß der Führungsring (9) die dem Radialvorsprung (19) des Schwungrings (13) axial zugewandte Stirnseite (20) der Riemenscheibe (6) im wesentlichen vollständig überdeckt und daß der Führungsring (9) und Jer Radialvorsprung (19) einander unter elastischer Vorspannung dichtend berühren.

6. Kupplung nach Anspruch 5, dadurch gekennzeichnet, daß der Führungsring (9) und der Radialvorsprung (19) eine im wesentlichen labyrinthförmige Dichtung (21) bilden.

7. Kupplung nach einem der Ansprüche 1 bis 6, dadurch gekennzeichnet, daß der Führungsring (9) mit zumindest zwei sich axial in Richtung des Radialvorsprungs (19) erstreckenden Dichtlippen (22, 23) versehen ist, die in mit radialem Abstand benachbarte ringförmige Vertiefungen (24, 25) des Radialvorsprungs (19) dichtend eingreifen und einen ringförmigen Hohlraum (26) begrenzen.

8. Kupplung nach Anspruch 7, dadurch gekennzeichnet, daß der Hohlraum (26) mit einem Sperrfett (27) befüllt ist, das eine größere Zähigkeit aufweist, als das Schmiermittel (10).

## Claims

1. A torsionally elastic coupling with an axis of rotation (1), comprising a first (2) and a second ring (3), one of which surrounds the other with a radial clearance, a first spring body (5) made of elastomeric material being arranged in the gap (4) formed by the clearance, and a belt pulley (6) being secured in a relatively torsionally elastic manner on at least one of the rings by means of a second spring body (7) made of elastomeric material and being supported at least in the radial direction on at least one of the rings by means of a sliding-contact bearing (8), characterized in that the sliding-contact bearing (8) is designed as a guide ring (9) and is composed of elastomeric material and in that the guide ring (9) and/or the ring (3) capable of rotation relative to it has at least one lubricant pocket (11), which is filled with lubricant (10) and is sealed off.

2. A coupling according to claim 1, characterized in that the first ring (2) is designed as a hub ring (12) and the second ring (3) is designed as a fly-ring (13), in that the fly-ring (13) surrounds the hub ring (12) at the outside, and in that the hub ring (12) is connected to the belt pulley (6), which is supported by the guide ring (9) on an axial projection (14) of the essentially L-shaped fly-ring (13).

3. A coupling according to either of claims 1 and 2, characterized in that, when considered in cross-section, the belt pulley (6) has an axially open C-shaped profile, in that the hub ring (12) has a C-shaped profile which is open towards the belt pulley (6) and in that the belt pulley (6) surrounds the axially extending, radially outer border (15) of the hub ring (12) and the axial projection (14) of the fly-ring (13) in the form of a slot.

4. A coupling according to any one of claims 1 to 3, characterized in that the guide ring (9) is composed exclusively of elastomeric material and has a Shore A hardness which is greater than the Shore A hardness of the first and the second spring body (5, 7), in that the guide ring (9) and the belt pulley (6) are connected adhesively and in that the guide ring (9) covers the bottom (16) of the belt pulley (6) essentially completely and can be brought into contact with the end (17) of the axial projection (14) of the fly-ring (13) and/or the end (18) of the radially outer border (15) of the hub ring (12).

5. A coupling according to any one of claims 1 to 4, characterized in that the guide ring (9) covers, essentially completely, that end (20) of the belt pulley (6) which axially faces the radial projection (19) of the fly-ring (13), and in that the guide ring (9) and the radial projection (19) contact one another in a sealing manner under elastic pre-stress.

6. A coupling according to claim 5, characterized in that the guide ring (9) and the radial projection (19) form an essentially labyrinthine seal (21).

7. A coupling according to any one of claims 1 to 6, characterized in that the guide ring (9) is provided with at least two sealing lips (22, 23) which extend axially in the direction of the radial projection (19), engage in a sealing manner in adjacent, radially spaced annular depressions (24, 25) in the radial projection (19) and delimit an annular cavity (26).

8. A coupling according to claim 7, characterized in that the cavity (26) is filled with a barrier grease (27) which has a higher viscosity than the lubricant (10).

## Revendications

1. Accouplement élastique rotatif avec un axe de rotation (1), comprenant une première (2) et une seconde (3) bagues qui s'entourent mutuellement avec une distance radiale, un premier corps élastique (5) en matière élastomère étant situé dans la fente (4) formée par la distance et une poulie (6) étant fixée, de manière relativement élastique et rotative, sur au moins une des bagues au moyen d'un second corps élastique (7) en matière élastomère et étant appuyée, au moins dans la direction radiale, sur au moins une des bagues au moyen d'un palier lisse (8), caractérisé en ce que le palier lisse (8) est exécuté en tant que bague de guidage (9) et est formé de matière élastomère et en ce que la bague de guidage (9) et/ou la bague (3) pouvant subir une torsion relative par rapport à celle-ci est/sont pourvue/s d'au moins un creux de graissage (11) rempli de lubrifiant (10) et rendu étanche.

2. Accouplement selon la revendication 1, caractérisé en ce que la première bague (2) est exécutée en tant que frette de roue (12) et la seconde bague (3) en tant que bague volante (13), en ce que la bague volante (13) entoure la frette de roue (12) sur son côté extérieur et en ce que la frette de roue (12) est reliée à la poulie (6) qui est appuyée sur une saillie axiale (14) de la bague volante (13) ayant essentiellement une forme en L grâce à la bague de guidage (9).

3. Accouplement selon l'une des revendications 1 à 2, caractérisé en ce que la poulie (6) a, vue en coupe, un profil en forme de C ouvert dans la direction axiale, en ce que la frette de roue (12) a un profil en forme de C ouvert dans le sens contraire de la poulie (6) et en ce que la poulie (6) entoure, à la manière d'une gorge, la limite extérieure (15), dans la direction radiale, de la frette de roue (12) s'étendant dans la direction axiale et la saillie axiale (14) de la bague volante (13).

4. Accouplement selon l'une des revendications 1 à 3, caractérisé en ce que la bague de guidage (9) est formée seulement de matière élastomère et a une dureté Shore A supérieure à la dureté Shore A des premier et second corps élastiques (5, 7), en ce que la bague de guidage (9) et la poulie (6) sont reliées par adhésif et en ce que la bague de guidage (9) couvre essentiellement en totalité le fond (16) de la poulie (6) et peut être mise en contact avec le côté frontal (17) de la saillie axiale (14) de la bague volante (13) et/ou avec le côté frontal (18) de la limite extérieure (15), dans la direction radiale, de la frette de roue (12).

5. Accouplement selon l'une des revendications 1 à 4, caractérisé en ce que la bague de guidage (9) couvre essentiellement en totalité le côté frontal (20) de la poulie (6) dirigé, dans la direction axiale, vers la saillie radiale (19) de la bague volante (13) et en ce que la bague de guidage (9) et la saillie radiale (19) sont en contact étanche l'une avec l'autre sous l'effet d'une précontrainte élastique.

6. Accouplement selon la revendication 5, caractérisé en ce que la bague de guidage (9) et la saillie radiale (19) forment une garniture d'étanchéité (21) ayant essentiellement une forme en labyrinthe.

7. Accouplement selon l'une des revendications 1 à 6, caractérisé en ce que la bague de guidage (9) est pourvue d'au moins deux lèvres d'étanchéité (22, 23) s'étendant de manière axiale dans la direction de la saillie radiale (19), qui s'emboîtent de manière étanche dans des creux annulaires (24, 25) de la saillie radiale (19) séparés par une distance radiale et qui limitent un espace vide (26) annulaire.

8. Accouplement selon la revendication 7, caractérisé en ce que l'espace vide (26) est rempli d'une graisse d'étanchement (27) présentant une plus grande viscosité que le lubrifiant (10).
